**Europäisches Patentamt**

**European Patent Office**

**Office européen des brevets**

(19)

(11) Veröffentlichungsnummer: **0 142 608**
**B1**

(12) # EUROPÄISCHE PATENTSCHRIFT

(45) Veröffentlichungstag der Patentschrift:
**10.12.86**

(51) Int. Cl.⁴: **B 23 B 31/04**

(21) Anmeldenummer: **84108388.4**

(22) Anmeldetag: **17.07.84**

(54) Spannfutter, insbesondere für Schlagbohrarbeiten.

(30) Priorität: **27.09.83 DE 8327665 U**

(43) Veröffentlichungstag der Anmeldung:
**29.05.85 Patentblatt 85/22**

(45) Bekanntmachung des Hinweises auf die Patenterteilung:
**10.12.86 Patentblatt 86/50**

(84) Benannte Vertragsstaaten:
**CH DE FR GB IT LI**

(56) Entgegenhaltungen:
**DE - A - 1 652 739**
**DE - A - 2 326 711**
**DE - A - 2 801 324**
**DE - A - 3 133 085**
**DE - U - 8 308 926**

(73) Patentinhaber: **Röhm, Günter Horst,**
**Heinrich-Röhm-Strasse 50, D-7927 Sontheim (DE)**

(72) Erfinder: **Röhm, Günter Horst,**
**Heinrich-Röhm-Strasse 50, D-7927 Sontheim (DE)**

(74) Vertreter: **Fay, Hermann, Dipl.-Phys. Dr.,**
**Ensingerstrasse 21 Postfach 1767, D-7900 Ulm (Donau)**
**(DE)**

EP 0 142 608 B1

## Beschreibung

Die Erfindung betrifft ein Spannfutter für Schlagbohrarbeiten, mit einem zum Anschluss an die Bohrspindel einer Antriebsmaschine eingerichteten Futterkörper, ferner mit Spannbacken, die eine zur Futterachse koaxiale Einspannöffnung für das Bohrwerkzeug bilden und zur Änderung des Durchmessers der Einspannöffnung radial zur Futterachse mittels eines Spannrings verstellbar sind, der koaxial zur Futterachse aussen am Futterkörper drehbar angeordnet ist.

Derartige Spannfutter sind aus dem DE-GM 83 08 926 bekannt. Bei ihnen wird das Bohrwerkzeug in der Spannöffnung zwar radial zentriert, axial aber noch verschiebbar gehalten, so dass das Bohrwerkzeug unmittelbar die Schlagwirkung der Bohrspindel ohne Dämpfung durch andere mitbewegte Massen übertragen kann. Um dabei dennoch eine drehende Mitnahme des Bohrwerkzeuges im Spannfutter zu gewährleisten, kann das Spannfutter mit geeigneten Mitnahmeeinrichtungen versehen sein, die mit Längsnuten oder Längsrippen am Bohrwerkzeug im Eingriff stehen.

In jedem Fall, und besonders bei der zuletzt beschriebenen, gleichsam losen Werkzeugeinspannung, muss verhindert werden, dass sich die Spannbacken unter den Beanspruchungen des Schlagbohrbetriebes radial verstellen und dadurch den Durchmesser der Einspannöffnung ändern. Solche selbsttätigen Spannbackenverstellungen auszuschliessen und dazu ein Spannfutter der eingangs genannten Art entsprechend auszubilden, liegt der Erfindung als Aufgabe zugrunde.

Diese Aufgabe wird nach der Erfindung dadurch gelöst, dass der Spannring am Futterkörper axial unverschiebbar gelagert ist und an seiner der werkzeugseitigen Futterstirnfläche abgewandten Stirnseite eine Verzahnung trägt, dass im Futterkörper eine Schlüsselaufnahme für den Führungszapfen eines Spannschlüssels vorgesehen ist, der ein Zahnritzel aufweist, dessen Verzahnung mit der Verzahnung des Zahnkranzes im Eingriff steht, wenn der Spannschlüssel mit dem Führungszapfen in die Schlüsselaufnahme eingesteckt ist, dass aussen am Futterkörper auf der der werkzeugseitigen Futterstirnfläche abgewandten Seite des Spannrings eine Futterhülse angeordnet ist, die an ihrem dem Spannring zugekehrten Hülsenrand Zähne aufweist und am Futterkörper undrehbar und axial so gegen die Kraft einer Feder verschiebbar geführt ist, dass die Futterhülse in ihrer gegen die Kraft der Feder vom Spannring weggeschobenen Stellung das Spannfutter mit seiner Schlüsselaufnahme zum Ansetzen des Spannschlüssels sowie den Spannring freigibt und in ihrer durch die Kraft der Feder an den Spannring herangeschobenen Stellung mit ihrem Zähnen in die Verzahnung des Spannrings greift und den Spannring gegen Drehungen verriegelt.

Der durch die Erfindung erreichte Fortschritt besteht im wesentlichen darin, dass es mittels der erfindungsgemäss vorgesehenen Futterhülse in einfacher Weise möglich ist, den Spannring während des Schlagbohrbetriebes gegen unerwünschte selbsttätige Verdrehungen zu sichern, so dass im Ergebnis über den Spannring auch die mit ihm im Eingriff stehenden Spannbacken unverstellbar gehalten sind und sich der Durchmesser der zwischen den Spannbacken gebildeten Einspannöffnung nicht ändern kann. Der verriegelnde Eingriff der Futterhülse am Spannring wird durch die Feder aufrechterhalten. Sollen die Spannbacken mit dem Spannring verstellt werden, ist es nur erforderlich, die Futterhülse gegen die Kraft der Feder zurückzuschieben, bis der Spannschlüssel am Spannfutter angesetzt werden kann. Wird dann bei angesetztem Spannschlüssel die Futterhülse losgelassen, stützt sie sich gegen die Kraft der Feder axial so am Spannschlüssel ab, dass ihre Zähne ausser Eingriff mit dem Spannring bleiben, also der Spannring mit Hilfe des Spannschlüssels verdreht werden kann. Dabei ist die Futterhülse in dem sich am Spannschlüssel abstützenden Bereich selbstverständlich so auszubilden, dass ihre Zähne nicht in die Verzahnung des Zahnritzels eingreifen können, weil andernfalls der Spannschlüssel unmittelbar blockiert würde. Im einzelnen kann dies in einfacher Weise dadurch erreicht werden, dass die Futterhülse im Bereich der Schlüsselaufnahme einen Anschlag aufweist, der bei an das Spannfutter angestecktem Spannschlüssel am Zahnritzel anschlägt und die Futterhülse mit ihren Zähnen ausser Eingriff mit den Verzahnungen des Zahnritzels und des Spannringes hält. Eine insoweit besonders vorteilhafte Ausführungsform ist nach der Erfindung dadurch gekennzeichnet, dass die Futterhülse eine zum Hülsenrand hin offene Aussparung für das Zahnritzel aufweist und der Aussparungsrand im Scheitelbereich der Aussparung den Anschlag bildet. In diesem Fall ist als Verschiebungsweg der Futterhülse zwischen ihrer den Spannring verriegelnden und den Spannring freigebenden Stellung nur geringfügig mehr als die Eingriffstiefe der Futterhülsenzähne an der Spannringverzahnung erforderlich.

Die Zähne der Futterhülse können als Verzahnung des Futterhülsenrandes entsprechend der des Spannringes bei übereinstimmender Winkelteilung ausgebildet sein. Besser und daher im Rahmen der Erfindung bevorzugt ist es aber, die Zähne der Futterhülse an axial gegen Federdruck in der Futterhülse verschiebbar geführten Zahnstiften auszubilden. Die Zahnstifte können dann unabhängig voneinander jeder für sich in die Verzahnung des Spannringes eintreten. Um insbes. dabei zu gewährleisten, dass in jeder Drehstellung des Spannringes wenigstens einer der Zahnstifte in die Verzahnung des Spannringes eingreifen kann, empfiehlt es sich, die Zahnstifte in einer Winkelteilung längs des Futterhülsenumfanges anzuordnen, die nach Art eines Nonius geringfügig grösser oder kleiner als die der Verzahnung am Spannring ist. Eine bevorzugte Ausführungsform der Erfindung ist somit dadurch gekennzeichnet, dass zumindest einige Zahnstifte längs des Futterhülsenumfanges in einer Winkelteilung angeordnet sind, bei der der Winkel zwischen diesen Zahnstiften gleich der Summe aus einem ganzzahligen Vielfachen des Winkelabstandes zwischen aufeinander folgenden Zähnen der Spannringverzahnung und einem Differenzwinkel ist, der gleich dem letztgenannten Winkelabstand geteilt durch die Anzahl dieser Zahnstifte ist.

In folgenden wird die Erfindung an in der Zeichnung dargestellten Ausführungsbeispielen näher erläutert; es zeigen:

Fig. 1 einen Axialschnitt durch ein Spannfutter nach der Erfindung mit am Spannfutter angesetztem Spannschlüssel und im Spannfutter eingespanntem Bohrer,

Fig. 2 einen Querschnitt in Richtung II-II durch das Spannfutter nach Fig. 1,

Fig. 3 eine Seitenansicht des Spannfutters nach Fig. 1 mit im Kegelritzel geschnittenem Spannschlüssel,

Fig. 4 einen Querschnitt in Richtung IV-IV durch den Gegenstand der Fig. 3,

Fig. 5 eine andere Ausführungsform des erfindungsgemässen Spannfutters in einem der Fig. 1 entsprechenden Axialschnitt,

Fig. 6 einen Querschnitt in Richtung VI-VI durch das Spannfutter nach Fig. 5,

Fig. 7 eine Seitenansicht des Spannfutters nach Fig. 5 in einer der Fig. 3 entsprechenden Darstellung,

Fig. 8 einen Querschnitt in Richtung VIII-VIII durch den Gegenstand der Fig. 7.

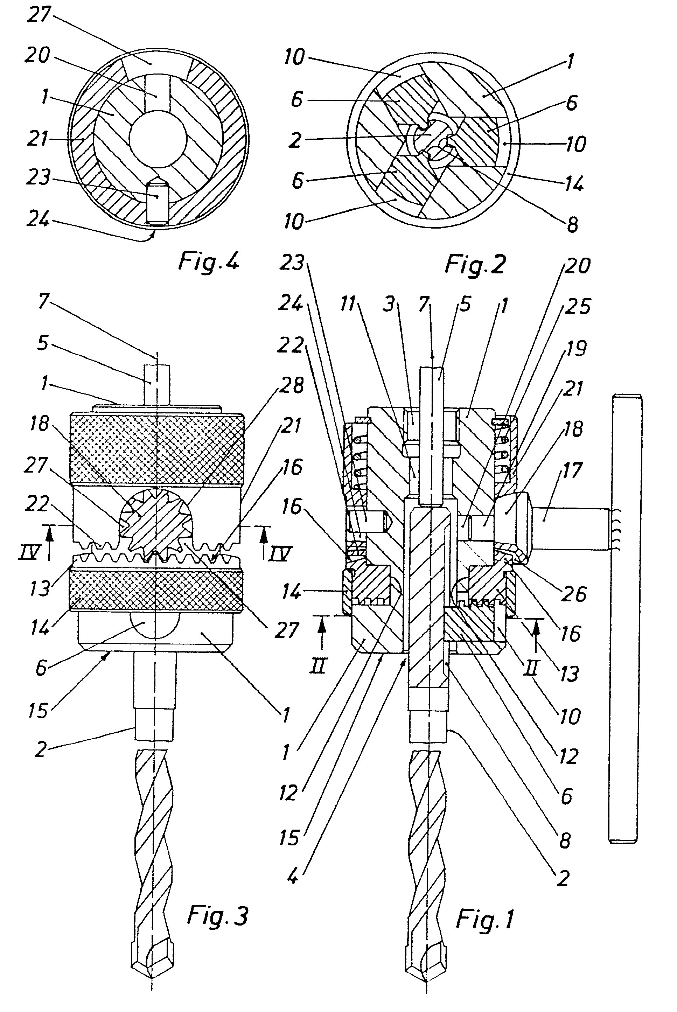

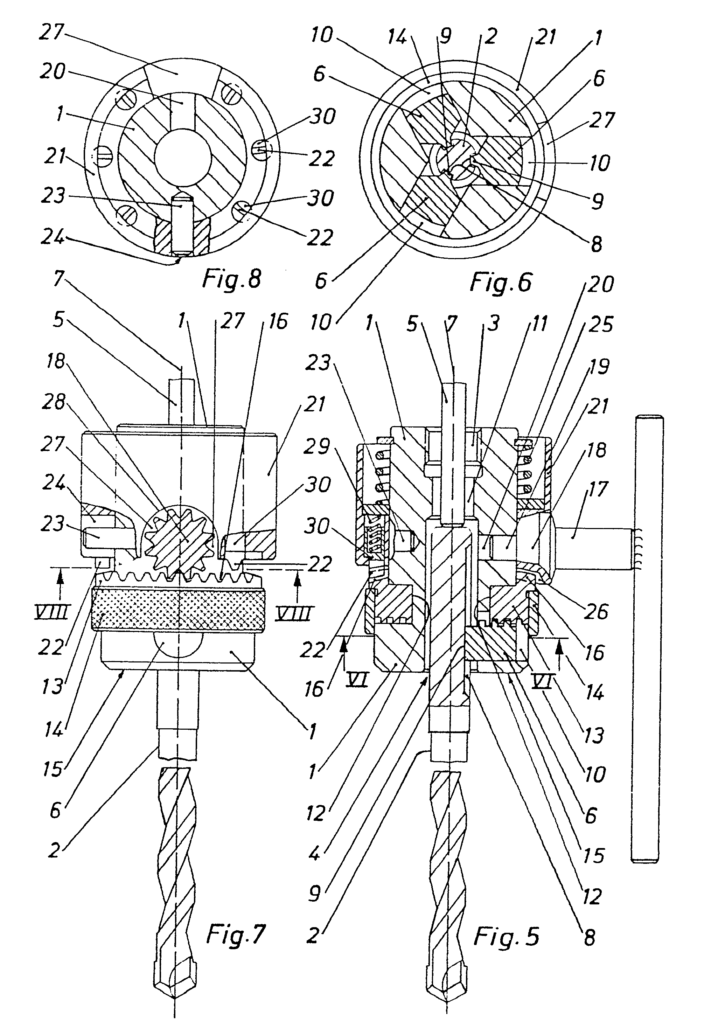

Die in der Zeichnung dargestellten Spannfutter dienen für Schlagbohrarbeiten und besitzen einen Futterkörper 1, der zum Anschluss an eine nicht dargestellte Bohrspindel eines ebenfalls nicht dargestellten Antriebsgerätes (Schlagbohrmaschine oder Bohrhammer) mit einer Gewindeaufnahme 3 versehen ist. Innerhalb der Bohrspindel ist zur Erzeugung von Schlägen auf das im Spannfutter gehaltene Ende des Bohrwerkzeuges 2 ein Schläger 5 geführt, dessen Beaufschlagung durch ein im Antriebsgerät hin- und hergehend angetriebenes Schlagstück als an sich bekannt nicht dargestellt ist. Die im Spannfutter bewegbaren Spannbacken sind mit 6 bezeichnet. Sie bilden eine zur Futterachse 7 koaxiale Einspannöffnung 4 für das Bohrwerkzeug 2 und sind zur Änderung des Durchmessers der Einspannöffnung 4 radial verstellbar im Futterkörper 1 geführt. Zwischen der Einspannöffnung 4 und der Gewindeaufnahme 3 befindet sich im Futterkörper 1 ein Durchbruch 11, durch den hindurch der Schläger 5 von der Bohrspindel her unmittelbar auf das Ende des in der Einspannöffnung 4 zwischen den Spannbacken 6 zwar eingespannten, aber noch axial verschiebbaren Bohrwerkzeuges 2 schlägt, so dass im Ergebnis durch den Durchbruch 11 hindurch die Schläge von der Bohrspindel direkt auf das Bohrwerkzeug 2 übertragen werden. Zur drehenden Mitnahme des Bohrwerkzeuges 2 durch das Spannfutter sind zum radialen Eingriff in Nuten 8 des Bohrwerkzeuges 2 eingerichtete Stollen 9 vorgesehen. Diese Stollen 9 befindet sich an der dem Bohrwerkzeug 2 zugewandten Spannbackenfläche der im Spannfutter relativ zum Futterkörper 1 gegen Drehbewegungen um die Futterachse 7 gesicherten Spannbacken 6, wozu die Spannbacken 6 in Schlitzen 10 des Futterkörpers 1 geführt sind, so dass sie sich in Umfangsrichtung an den Schlitzseitenwänden abstützen. Die Spannbacken 6 sind durch einen axial neben ihnen in einer Ringnut 12 des Futterkörpers 1 gelagerten Spannring 13 verstellbar. Dazu besitzt der Spannring 13 auf seiner den Spannbacken 6 zugewandten Planseite jeweils ein Plangewinde, dessen Gewindegänge mit entsprechenden planen Gewindeabschnitten an den dem Spannring 13 zugewandten Seiten der Spannbacken 6 im Eingriff stehen, wobei die Spannbacken 6 als zylindrische Bolzen ausgebildet sein können, in welche die planen Gewindeabschnitte mit sich entsprechend der zylindrischen Bolzenmantelfläche ändernder Höhe eingeschnitten sind. Der Spannring 13 ist in Umfangsrichtung zweigeteilt. Eine axial über den Spannring 13 beschobene Hülse 14 hält beide Teile des Spannringes zusammen. Im übrigen besitzt der Spannring 13 auf seiner der werkzeugseitigen Futterstirnfläche 15 abgewandten Stirnseite eine Verzahnung 16 zur Betätigung durch einen am Futterkörper 1 ansetzbaren Spannschlüssel 17 mit in die Verzahnung 16 des Spannringes 13 greifendem Zahnritzel 18, wenn der Spannschlüssel 17 mit seinem Führungszapfen 19 in eine hierfür am Futterkörper 1 vorgesehene Schlüsselaufnahme 20 eingesteckt wird, wie es in den Fig. 1 und 5 dargestellt ist. Aussen am Futterkörper 1 ist auf der der werkzeugseitigen Futterstirnfläche 15 abgewandten Seite des Spannringes 13 eine Futterhülse 21 angeordnet. Die Futterhülse 21 besitzt an ihrem dem Spannring 13 zugekehrten Hülsenrand Zähne 22. Sie ist am Futterkörper 1 mittels eines Sicherungsstiftes 23, der in ein Langloch 24 der Futterhülse 21 greift, undrehbar und axial so gegen die Kraft einer Feder 25 verschiebbar geführt, dass die Futterhülse 21 in ihrer gegen die Federkraft vom Spannring 13 weggeschobenen Stellung das Spannfutter mit seiner Schlüsselaufnahme 20 zum Ansetzen des Spannschlüssels 17 freigibt, wie es die Fig. 1, 3, 7 und 5 erkennen lassen. In dieser Stellung befinden sich die Zähne 22 ausser Eingriff mit der Verzahnung 16 des Spannringes 13. In ihrer durch die Kraft der Feder 25 an den Spannring 13 herangeschobenen Stellung dagegen greift die Futterhülse 21 mit ihren Zähnen 22 in die Verzahnung 16 des Spannringes 13 und verriegelt dadurch den Spannring 13 gegen Drehungen, wie es die Fig. 1 und 5 in der linken Figurenhälfte zeigen. Die Futterhülse 21 wird bei an das Spannfutter angestecktem Spannschlüssel 17 von diesem selbsttätig ausser Eingriff am Spannring 13 gehalten. Dazu schlägt die Futterhülse 21 unter der Kraft der Feder 25 gegen das Zahnritzel 18 des Spannschlüssels 17 an, ohne dass dabei die Zähne 22 der Futterhülse 21 in die Verzahnung 26 des Zahnritzels 18 eingreifen können. In den Ausfürungsbeispielen ist dazu die Futterhülse 21 mit einer zum Hülsenrand hin offenen Aussparung 27 für das Zahnritzel 18 versehen, wobei der von Zähnen freie Aussparungsrand 28 im Scheitelbereich der Aussparung 27 den Anschlag bildet.

Im Ausführungsbeispiel nach den Fig. 1 bis 4 sind die Zähne 22 der Futterhülse 21 durch eine Verzahnung des Hülsenrandes gleich der Verzahnung 16 des Spannringes 13 gebildet. Im Ausführungsbeispiel nach den Fig. 5 bis 8 dagegen sind die Zähne 22 der Futterhülse 21 an axial gegen Federdruck 29 in der Futterhülse 21 verschiebbar geführten Zahnstiften 30 ausgebildet. Dabei sind, wie insbes. Fig. 8 erkennen lässt, sechs solcher Zahnstifte 30 vorgesehen. Sie sind längs des Futterhülsenumfanges in einer Winkelteilung angeordnet, bei der der Zentrumswinkel zwischen aufeinander folgenden Zahnstiften 30 gleich der Summe aus einem ganzzahligen Vielfachen des Winkelabstandes zwischen aufeinanderfolgenden Zähnen der Spannringverzahnung 16 und einem Differenzwinkel ist, der gleich dem letztgenannten Winkelabstand geteilt durch die Anzahl der Zahnstifte 30, im Ausführungsbeispiel also geteilt durch sechs, ist. Unabhängig von der jeweiligen Drehstellung des Spannringes 13 kann dann immer wenigstens einer der Zahnstifte 30 in die Verzahnung 16 des Spannringes 13 eintreten. Selbstverständlich besteht aber auch die Möglichkeit, eine solche Winkelteilung nur zwischen den jeweils zweiten längs des Hülsenumfangs aufeinander folgenden Zahnstiften 30 vorzusehen, so dass sich der Differenzwinkel aus dem Winkelabstand zwischen aufeinanderfolgenden Zähnen der Spannringverzahnung 16 geteilt durch die halbe Anzahl der Zahnstifte 30 ergibt. In diesem Fall können immer zwei Zahnstifte 30 gleichzeitig in die Verzahnung 16 des Spannringes 13 eintreten.

## Patentansprüche

1. Spannfutter für Schlagbohrarbeiten, mit einem zum Anschluss an die Bohrspindel einer Antriebsmaschine eingerichteten Futterkörper (1), ferner mit Spannbacken (6), die eine zur Futterachse (7) koaxiale Einspannöffnung (4) für das Bohrwerkzeug (2) bilden und zur Änderung des Durchmessers der Einspannöffnung (4) radial zur Futterachse (7) mittels eines Spannrings (13) verstellbar sind, der koaxial zur Futterachse (7) aussen am Futterkörper (1) drehbar angeordnet ist, dadurch gekennzeichnet, dass der Spannring (13) am Futterkörper (1) axial unverschiebbar gelagert ist und an seiner der werkzeugseitigen Futterstirnfläche (15) abgewandten Stirnseite eine Verzahnung (16) trägt, dass im Futterkörper (1) eine Schlüsselaufnahme (20) für den Führungszapfen (19) eines Spannschlüssels (17) vorgesehen ist, der ein Zahnritzel (18) aufweist, dessen Verzahnung (26) mit der Verzahnung (16) des Zahnkranzes (13) im Eingriff steht, wenn der Spannschlüssel (17) mit dem Führungszapfen (19) in die Schlüsselaufnahme (20) eingesteckt ist, dass aussen am Futterkörper (1) auf der der werkzeugseitigen Futterstirnfläche (15) abgewandten Seite des Spannrings (13) eine Futterhülse (21) angeordnet ist, die an ihrem dem Spannring (13) zugekehrten Hülsenrand Zähne (22) aufweist und am Futterkörper (1) undrehbar und axial so gegen die Kraft einer Feder (25) verschiebbar geführt ist, dass die Futterhülse (21) in ihrer gegen die Kraft der Feder (25) vom Spannring (13) weggeschobenen Stellung das Spannfutter mit seiner Schlüsselaufnahme (20) zum Ansetzen des Spannschlüssels (17) sowie den Spannring (13) freigibt und in ihrer durch die Kraft der Feder (25) an den Spannring (13) herangeschobenen Stellung mit ihren Zähnen (22) in die Verzahnung (16) des Spannrings (13) greift und den Spannring (13) gegen Drehungen verriegelt.

2. Spannfutter nach Anspruch 1, dadurch gekennzeichnet, dass die Futterhülse (21) im Bereich der Schlüsselaufnahme (20) einen Anschlag aufweist, der bei an das Spannfutter angestecktem Spannschlüssel (17) am Zahnritzel (10) anschlägt und die Futterhülse (21) mit ihren Zähnen (22) ausser Eingriff mit den Verzahnungen (16, 26) des Zahnritzels (18) und des Spannrings (13) hält.

3. Spannfutter nach Anspruch 2, dadurch gekennzeichnet, dass die Futterhülse (21) eine zum Hülsenrand hin offene Aussparung (27) für das Zahnritzel (18) aufweist und der Aussparungsrand (28) im Scheitelbereich der Aussparung (27) den Anschlag bildet.

4. Spannfutter nach einem der Ansprüche 1 bis 3, dadurch gekennzeichnet, dass die Zähnen (22) der Futterhülse (21) an axial gegen Federdruck (29) in der Futterhülse (21) verschiebbar geführten Zahnstiften (30) ausgebildet sind.

5. Spannfutter nach Anspruch 4, dadurch gekennzeichnet, dass zumindest einige Zahnstifte (30) längs des Futterhülsenumfangs in einer Winkelteilung angeordnet sind, bei der der Winkel zwischen diesen Zahnstiften (30) gleich der Summe aus einem ganzzahligen Vielfachen des Winkelabstandes zwischen aufeinander folgenden Zähnen der Spannringverzahnung (16) und einem Differenzwinkel ist, der gleich dem letztgenannten Winkelabstand geteilt durch die Anzahl dieser Zahnstifte (30) ist.

## Claims

1. A clamping chuck for hammer drilling operations comprising a chuck body (1) which is arranged for connection to the drilling spindle of a drive machine, clamping jaws (6) which form a clamping opening (4), coaxial with respect to the axis (7) of the chuck, for the drilling tool (2), and which are displaceable radially with respect to the axis (7) of the chuck to alter the diameter of the clamping opening (4), by means of a clamping ring (13) which is rotatably arranged on the chuck body (1) on the outside thereof coaxially with respect to the axis (7) of the chuck, characterised in that the clamping ring (13) is axially immovably mounted on the chuck body (1) and carries a tooth arrangement (16) at its face which is remote from the end face (15) of the chuck which is towards the tool, that provided in the chuck body (1) is a key receiving means (20) for receiving the guide pin portion (19) of a clamping key (17) which has a pinion (18) whose tooth arrangement (26) is engaged with the tooth arrangement (16) of the toothed ring (13) when the clamping key (17) is fitted with the guide pin portion (19) into the key receiving means (20), that a chuck sleeve (21) is arranged on the chuck body (1) on the outside thereof on the side of the clamping ring (13) which is remote from the end face (15) of the chuck which is towards the tool, which chuck sleeve (21) has teeth (22) at the edge thereof which is towards the clamping ring (13) and is guided on the chuck body (1) non-rotatably and axially displaceably against the force of a spring (25) in such a way that, in its position of being pushed away from the clamping ring (13) against the force of the spring (25), the chuck sleeve (21) exposes the clamping chuck with its key receiving means (20) for fitting the clamping key (17) and the clamping ring (13) and, in its position of being pushed against the clamping ring (13) by the force of the spring (25), engages with its teeth (22) into the tooth arrangement (16) of the clamping ring (13) and locks the clamping ring (13) to prevent rotary movements thereof.

2. A clamping chuck according to claim 1, characterised in that in the region of the key receiving means (20) the chuck sleeve (21) has an abutment which abuts against the pinion (10) when the clamping key (17) is fitted to the clamping chuck and holds the chuck sleeve (21) with the teeth (22) thereof out of engagement with the tooth arrangements (16, 26) of the pinion (18) and the clamping ring (13).

3. A clamping chuck according to claim 2, characterised in that the chuck sleeve (21) has a recess (27) which is open towards the edge of the sleeve, for receiving the pinion (18) and the edge (28) of the recess (27), in the region of the apex of the recess, forms the abutment.

4. A clamping chuck according to one of claims 1 to 3, characterised in that the teeth (22) of the chuck sleeve (21) are provided on tooth pins (30) which are guided in the chuck sleeve (21) axially displaceably therein against spring pressure (29).

5. A clamping chuck according to claim 4, characterised in that at least some tooth pins (30) are arranged around the periphery of the chuck sleeve in an angularly spaced configuration in which the angle between said tooth pins (30) is equal to the sum of an integral multiple of the angular spacing between successive teeth of the tooth arrangement (16) of the clamping ring and a differential angle which is equal to the last-mentioned angular spacing divided by the number of said tooth pins (30).

**Revendications**

1. Mandrin de serrage, en particulier pour le forage à percussion, avec un corps de mandrin (1) aménagé pour le raccordement à la broche de perçage d'un moteur d'entraînement ainsi qu'avec des mâchoires de serrage (6) qui forment, coaxialement à l'axe de mandrin (7), un logement de fixation (4) pour l'outil de perçage (2) et qui, pour modifier le diamètre de l'ouverture de fixation (4), peuvent être réglées par rapport à l'axe de mandrin (7) au moyen d'une bague de serrage (13) disposée coaxialement à l'axe de mandrin (7), à l'extérieur du corps de mandrin (1) de façon à pouvoir tourner, caractérisé par le fait que la bague de serrage (13) est montée sur le corps de mandrin (1) de manière immobile dans le sens axial et qu'elle porte à sa face frontale opposée à la face frontale (15) côté outil du mandrin une denture (16), que le corps de mandrin (1) comporte un logement de clé (20) pour le tourillon de guidage (19) d'une clé de serrage (17) munie d'un pignon (18) dont la denture (26) coopère avec la denture (16) de la couronne dentée (13) lorsque la clé de serrage (17) est engagée avec le tourillon de guidage (19) dans le logement de clé (20), qu'à l'extérieur du corps de mandrin (1), sur la face de la bague de serrage (13) opposée à la face frontale (15) du mandrin, côté outil, est disposée une douille de mandrin (21) qui présente des dents (22) sur son bord dirigé vers la bague de serrage (13) et qui est guidée de manière rigide en torsion et coulissant dans le sens axial contre la force d'un ressort (25) de telle façon que, dans sa position écartée de la bague de serrage (13) contre la force du ressort (25), la douille de mandrin (21) libère le mandrin de serrage avec son logement de clé (20) pour la mise en place de la clé de serrage (17) ainsi que la bague de serrage (13) et que, dans sa position rapprochée de la bague de serrage par la force du ressort (25), elle s'engage dans la denture (16) de la bague de serrage (13) en verrouillant celle-ci en rotation.

2. Mandrin de serrage selon la revendication 1, caractérisé par le fait que la douille de mandrin (21) présente, dans la région du logement de clé (20), une butée qui s'applique contre le pignon (18) lorsque la clé de serrage (17) est engagée dans le mandrin de serrage et qui maintient les dents (22) de la douille de mandrin (21) séparées des dentures (16, 26) du pignon (18) et de la bague de serrage (13).

3. Mandrin de serrage selon la revendication 2, caractérisé par le fait que la douille de mandrin (21) comporte un évidement (27) pour le pignon (18) ouvert en direction du bord de la douille et que le bord de l'évidement (28) dans la région du sommet de l'évidement (27) constitue la butée.

4. Mandrin de serrage selon l'une quelconque des revendications 1 à 3, caractérisé par le fait que les dents (22) de la douille de mandrin (21) sont conformées sur des chevilles (30) guidées dans la douille de mandrin (21) de façon à pouvoir coulisser axialement en vainquant la force d'un ressort (29).

5. Mandrin de serrage selon la revendication 4, caractérisé par le fait qu'au moins quelques-unes des chevilles (30) sont disposées le long de la circonférence de la douille de mandrin avec une division angulaire telle que l'angle entre ces chevilles (30) est égal à la somme d'un multiple entier de l'écart angulaire entre des dents consécutives de la denture (16) de la bague de serrage et d'un angle différentiel qui est égal à l'écart angulaire précité divisé par le nombre de ces chevilles (30).

Fig.4

Fig.2

Fig.3

Fig.1

Fig.8

Fig.6

Fig.7

Fig.5